# EUROPEAN PATENT APPLICATION

(11) **EP 4 827 215 A1**
(43) Date of publication of application: **21.10.2026**
(21) Application number: 25783136.2
(22) Date of filing: 03.04.2025
(51) Int. Cl.: H04W 72/231, H04B 17/309, H04W 72/232, H04W 52/14, H04W 52/32, H04L 5/00

(54) **METHOD AND APPARATUS FOR SETTING PATH LOSS OFFSET IN ASYMMETRIC TRP SYSTEM**

(30) Priority: 03.04.2024 KR 20240045585
(71) Applicant: Hyundai Motor Company, Seoul 06797 (KR); Kia Corporation, Seoul 06797 (KR)
(72) Inventor: LEE, Jeong Su, Hwaseong-si, Gyeonggi-do 18280 (KR); HONG, Ui Hyun, Hwaseong-si, Gyeonggi-do 18280 (KR); SUH, Young Kil, Hwaseong-si, Gyeonggi-do 18280 (KR); HAHN, Gene Back, Hwaseong-si, Gyeonggi-do 18280 (KR)
(74) Representative: Isarpatent
(86) International application number: PCT/KR2025/004404
(87) International publication number: WO 2025/211777

(57) **Abstract**

Disclosed are a method and apparatus for setting a path loss offset in an asymmetric TRP system. The method for a user equipment (UE) comprises the steps of: receiving information about a path loss offset value from a first transmission and reception point (TRP); determining second transmission power for a second uplink (UL) communication with a second TRP on the basis of the path loss offset value; and performing the second UL communication with the second TRP by using the second transmission power.

## Description

### [Technical Field]

The present disclosure relates to an enhanced communication technique, and more particularly, to a technique for configuring a path loss offset in a communication system supporting asymmetric transmission and reception points (TRPs).

### [Background Art]

A communication network (e.g., 5G communication network and/or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands below 6 GHz and above 6 GHz. In other words, the 5G communication network can support both frequency range 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, multiple transmission and reception points (mTRP) may be introduced into a communication network (e.g., 5G communication network and/or 6G communication network). The mTRP may be geographically separated. A base station may perform communication with a terminal using the mTRP. mTRP technology may be used to solve a quality of service (QoS) degradation problem of a cell-edge terminal and/or an inter-cell interference problem. In an environment where a non-line-of-sight (NLOS) path is limited, the mTRP technology may be used to provide an additional communication path.

mTRP-based communication may be performed based on a coherent joint transmission (CJT) scheme or a non-CJT (NCJT) scheme. In the CJT scheme, the mTRP may perform cooperative communication based on a stable backhaul link, and the mTRP may provide synchronized communication services to the terminal. In the NCJT scheme, the mTRP may provide communication services to the terminal without cooperation. For example, in the NCJT scheme, the mTRP may perform operations such as scheduling, precoding matrix selection, and modulation and coding scheme (MCS) determination without cooperation.

In an asymmetric TRP system, a terminal may perform downlink (DL) communication with a single TRP (sTRP), and the terminal may perform uplink (UL) communication with multiple TRPs (mTRP). The terminal may perform downlink (DL) communication with a first TRP supporting a macro cell, and the terminal may perform uplink (UL) communication with a second TRP supporting a micro cell. When the terminal performs UL communication with the second TRP using transmit power determined based on path loss on a link between the terminal and the first TRP, power consumption of the terminal may increase, and interference caused by the UL communication may increase. A method for determining transmit power to address the above problem may be required.

### [Disclosure]

### [Technical Problem]

The present disclosure is directed to providing a method and an apparatus for setting a path loss offset in a communication system supporting asymmetric TRPs.

### [Technical Solution]

A method of a user equipment (UE), according to exemplary embodiments of the present disclosure for achieving the above-described objective, may comprise: receiving, from a first transmission and reception point (TRP), information on a path loss offset value; determining, based on the path loss offset value, a second transmit power for second uplink (UL) communication with a second TRP; and performing the second UL communication with the second TRP using the second transmit power.

The method may further comprise: determining, without consideration of the path loss offset value, a first transmit power for first UL communication with the first TRP; and performing the first UL communication with the first TRP using the first transmit power.

The path loss offset value may be a common path loss offset value that is not associated with a transmission configuration indicator (TCI) state, and the common path loss offset value may be applied to determine the second transmit power regardless of a TCI state of the second TRP.

The path loss offset value may be a dedicated path loss offset value configured to be associated with a TCI state, and one dedicated path loss offset value associated with the TCI state of the second TRP among one or more dedicated path loss offset values indicated by the first TRP may be applied to determine the second transmit power.

The information on the path loss offset value may include a common path loss offset value and a dedicated path loss offset value, and one path loss offset value selected based on priority between the common path loss offset value and the dedicated path loss offset value may be used to determine the second transmit power.

The information on the path loss offset value may be received through at least one of a radio resource control (RRC) message, a medium access control (MAC) control element (CE), or downlink control information (DCI).

The information on the path loss offset value may be included in TCI state information or UL bandwidth part (BWP)-dedicated information, the TCI state information or the UL BWP-dedicated information being an RRC configuration indicated by the RRC message.

The information on the path loss offset value may be included in the MAC CE, and the MAC CE may include at least one of a first field indicating the path loss offset value, a second field indicating whether the path loss offset value exists in the MAC CE, or a third field indicating a sign of the path loss offset value.

A plurality of path loss offset values associated with a plurality of TCI states may be configured for the UE by the RRC message, two or more path loss offset values among the plurality of path loss offset values may be activated by the MAC CE, one path loss offset value among the two or more path loss offset values may be indicated to the UE by the DCI, and the one path loss offset value may be used to determine the second transmit power.

The method may further comprise: receiving, from the first TRP, information indicating whether to use the path loss offset value, wherein, based on use of the path loss offset value being indicated, the path loss offset value may be used to determine the second transmit power.

The receiving of the information on the path loss offset value may comprise: receiving, from the first TRP, an RRC message including the path loss offset value; and receiving, from the second TRP, a message including update information on the path loss offset value, wherein the path loss offset value used to determine the second transmit power may be a path loss offset value updated based on the update information.

A user equipment (UE) according to exemplary embodiments of the present disclosure for achieving the above-described objective may comprise at least one processor, and the at least one processor may cause the UE to perform: receiving, from a first transmission and reception point (TRP), information on a path loss offset value; determining, based on the path loss offset value, a second transmit power for second uplink (UL) communication with a second TRP; and performing the second UL communication with the second TRP using the second transmit power.

The at least one processor may further cause the UE to perform: determining, without consideration of the path loss offset value, a first transmit power for first UL communication with the first TRP; and performing the first UL communication with the first TRP using the first transmit power.

The path loss offset value may be a common path loss offset value that is not associated with a transmission configuration indicator (TCI) state, and the common path loss offset value may be applied to determine the second transmit power regardless of a TCI state of the second TRP.

The path loss offset value may be a dedicated path loss offset value configured to be associated with a TCI state, and one dedicated path loss offset value associated with the TCI state of the second TRP among one or more dedicated path loss offset values indicated by the first TRP may be applied to determine the second transmit power.

In the receiving of the information on the path loss offset value, the at least one processor may cause the UE to perform: receiving, from the first TRP, a radio resource control (RRC) message including the path loss offset value; and receiving, from the second TRP, a message including update information on the path loss offset value, wherein the path loss offset value used to determine the second transmit power may be a path loss offset value updated based on the update information.

The information on the path loss offset value may be received through at least one of a radio resource control (RRC) message, a medium access control (MAC) control element (CE), or downlink control information (DCI).

The information on the path loss offset value may be included in the MAC CE, and the MAC CE may include at least one of a first field indicating the path loss offset value, a second field indicating whether the path loss offset value exists in the MAC CE, or a third field indicating a sign of the path loss offset value.

A plurality of path loss offset values associated with a plurality of TCI states may be configured for the UE by the RRC message, two or more path loss offset values among the plurality of path loss offset values may be activated by the MAC CE, one path loss offset value among the two or more path loss offset values may be indicated to the UE by the DCI, and the one path loss offset value may be used to determine the second transmit power.

The at least one processor may further cause the UE to perform: receiving, from the first TRP, information indicating whether to use the path loss offset value, wherein, based on use of the path loss offset value being indicated, the path loss offset value may be used to determine the second transmit power.

### [Advantageous Effects]

According to the present disclosure, in an asymmetric TRP system, a terminal may perform DL communication with a first TRP, and the terminal may perform UL communication with the first TRP and a second TRP. Alternatively, the terminal may perform UL communication with the second TRP. The terminal may determine transmit power based on path loss determined from a link measurement result between the terminal and the first TRP, and may perform UL communication with the first TRP using the transmit power. The terminal may determine transmit power based on the path loss determined from the link measurement result between the terminal and the first TRP and a path loss offset value, and may perform UL communication with the second TRP using the transmit power. The path loss used to determine transmit power for UL communication with the second TRP may be corrected by the path loss offset value. Different transmit powers may be used for UL communication with the first TRP and UL communication with the second TRP according to a communication environment. Accordingly, interference associated with UL communication can be efficiently controlled, power consumption efficiency of the terminal can be improved, and performance of a communication system (e.g., an asymmetric TRP system) can be improved.

### [Description of Drawings]

FIG. 1 is a conceptual diagram illustrating exemplary embodiments of a communication system.
FIG. 2 is a block diagram illustrating exemplary embodiments of a communication node constituting a communication system.
FIG. 3 is a block diagram illustrating exemplary embodiments of communication nodes performing communication.
FIG. 4A is a block diagram illustrating exemplary embodiments of a transmission path.
FIG. 4B is a block diagram illustrating exemplary embodiments of a reception path.
FIG. 5 is a conceptual diagram illustrating exemplary embodiments of a system frame in a communication system.
FIG. 6 is a conceptual diagram illustrating exemplary embodiments of a subframe in a communication system.
FIG. 7 is a conceptual diagram illustrating exemplary embodiments of a slot in a communication system.
FIG. 8 is a conceptual diagram illustrating exemplary embodiments of a time-frequency resource in a communication system.
FIG. 9 is a conceptual diagram illustrating an exemplary embodiment of an asymmetric TRP system.
FIG. 10 is a conceptual diagram illustrating exemplary embodiments of a power parameter list including a path loss offset.
FIG. 11A is a conceptual diagram illustrating exemplary embodiments of MAC CE for activation of a joint-type TCI state.
FIG. 11B is a conceptual diagram illustrating exemplary embodiments of MAC CE for activation of a separate-type TCI state.
FIG. 12A is a conceptual diagram illustrating exemplary embodiments of MAC CE for activation of a joint-type TCI state.
FIG. 12B is a conceptual diagram illustrating exemplary embodiments of MAC CE for activation of a separate-type TCI state.
FIG. 13 is a sequence chart illustrating exemplary embodiments of a UL communication method in an asymmetric TRP system.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. In other words, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

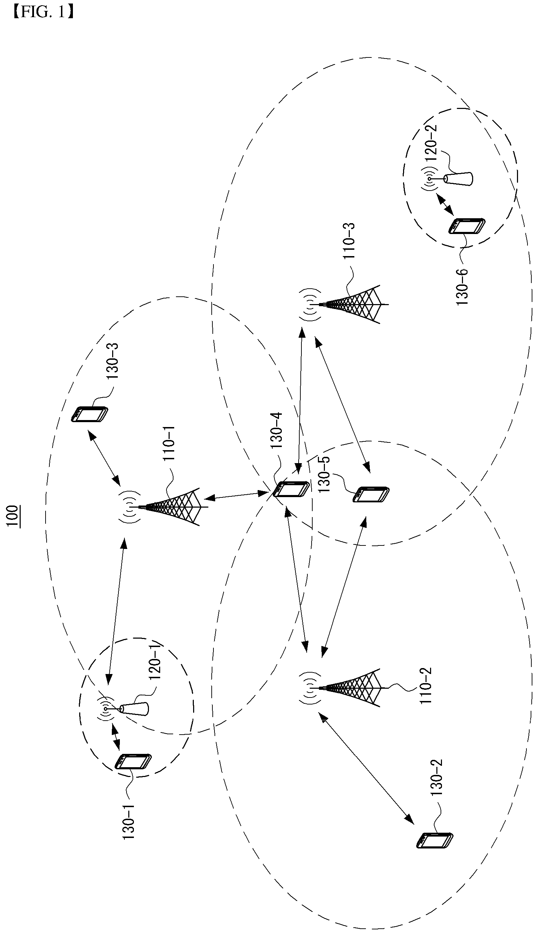

FIG. 1 is a conceptual diagram illustrating exemplary embodiments of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g., a serving gateway (S-GW), a packet data network (PDN) gateway (P-GW), a mobility management entity (MME). When the communication system 100 is a 5G communication (e.g., NR system), the core network may include an access and mobility management function (AMF), a user plane function (UPF), a session management function (SMF), and the like.

The plurality of communication nodes 110 to 130 may support communication protocols (e.g., LTE communication protocol, LTE-A communication protocol, NR communication protocol, etc.) specified in 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication nodes may have the following structure.

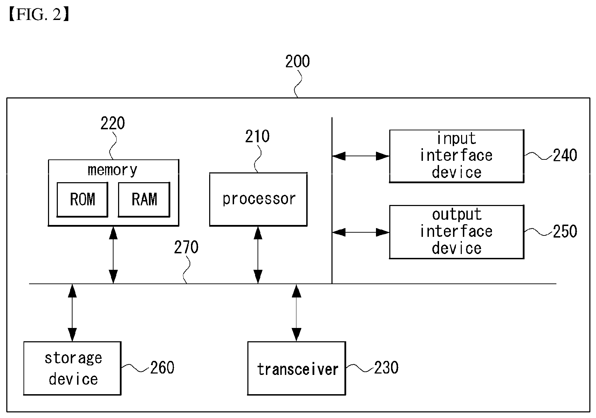

FIG. 2 is a block diagram illustrating exemplary embodiments of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g., a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g., device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminal 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

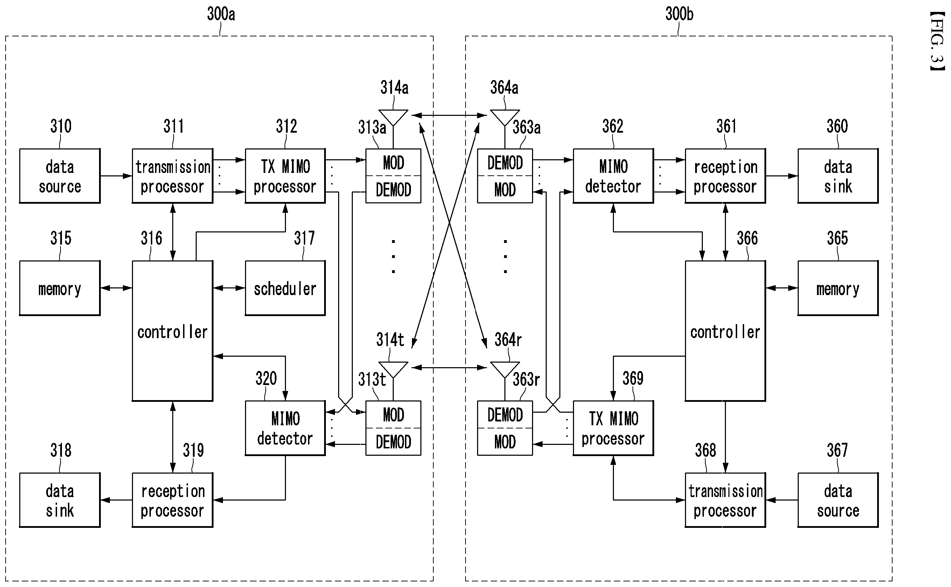

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating exemplary embodiments of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g., data unit) from a data source 310. The transmission processor 311 may receive control information from a controller 316. The control information may include at least one of system information, RRC configuration information (e.g., information configured by RRC signaling), MAC control information (e.g., MAC CE), or PHY control information (e.g., DCI, SCI).

The transmission processor 311 may generate data symbol(s) by performing processing operations (e.g., encoding operation, symbol mapping operation, etc.) on the data. The transmission processor 311 may generate control symbol(s) by performing processing operations (e.g., encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g., precoding operations) on the data symbol(s), control symbol(s), and/or synchronization/reference symbol(s). An output (e.g., symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g., analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g., de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g., data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g., precoding operations) on the data symbol(s), control symbol(s), and/or reference symbol(s). An output (e.g., symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g., analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g., de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

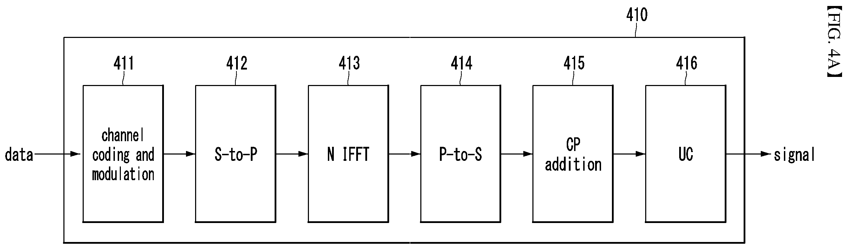

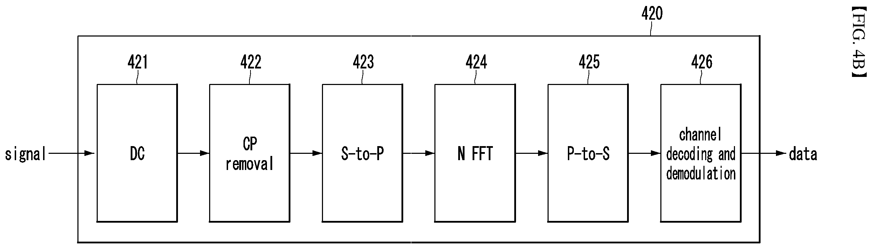

FIG. 4A is a block diagram illustrating exemplary embodiments of a transmission path, and FIG. 4B is a block diagram illustrating exemplary embodiments of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 411 may perform a coding operation (e.g., low-density parity check (LDPC) coding operation, polar coding operation, etc.) and a modulation operation (e.g., Quadrature Phase Shift Keying (QPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g., components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

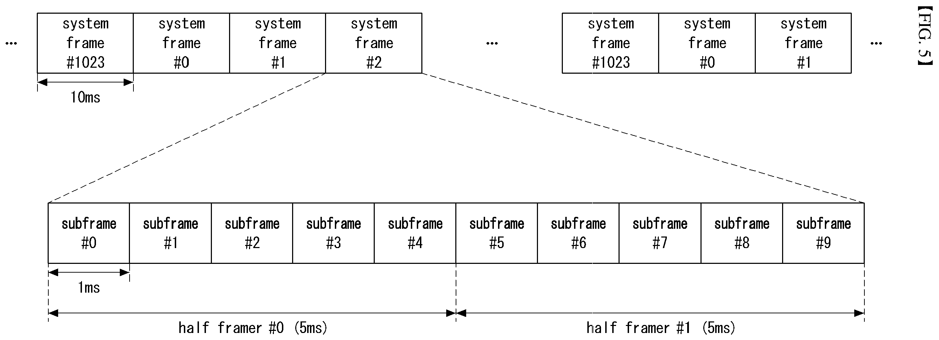

FIG. 5 is a conceptual diagram illustrating exemplary embodiments of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

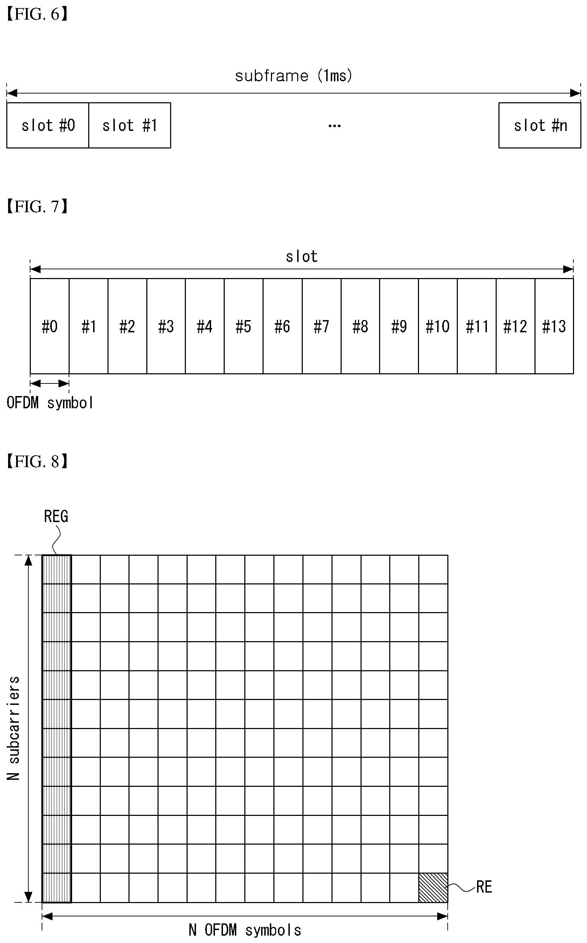

FIG. 6 is a conceptual diagram illustrating exemplary embodiments of a subframe in a communication system.

As shown in FIG. 6, one subframe may include n slots, and n may be a natural number. Accordingly, one subframe may consist of one or more slots.

FIG. 7 is a conceptual diagram illustrating exemplary embodiments of a slot in a communication system.

As shown in FIG. 7, one slot may include one or more symbols. For example, one slot shown in FIG. 7 may include 14 symbols. The length of a slot may vary according to the number of symbols included in a slot and the length of symbol. Alternatively, the length of a slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [µs] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g., µ = 0), the length of a slot may be 1 ms. In this case, one system frame may include 10 slots. When a subcarrier spacing is 30 kHz (e.g., µ = 1), the length of a slot may be 0.5 ms. In this case, one system frame may include 20 slots.

When a subcarrier spacing is 60 kHz (e.g., µ = 2), the length of a slot may be 0.25 ms. In this case, one system frame may include 40 slots. When a subcarrier spacing is 120 kHz (e.g., µ = 3), the length of a slot may be 0.125 ms. In this case, one system frame may include 80 slots. When a subcarrier spacing is 240 kHz (e.g., µ = 4), the length of a slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g., RRC signaling). Information indicating a semi-static slot format may be included in system information, and the semi-static slot format may be configured cell-specifically. Additionally, a semi-static slot format may be further configured for each terminal through terminal-specific higher-layer signaling (e.g., RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g., slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), Physical Sidelink Control Channel (PSCCH), and Physical Sidelink Shared Channel (PSSCH). In the present disclosure, a control channel may refer to PDCCH, PUCCH, or PSCCH, and a data channel may refer to PDSCH, PUSCH, or PSSCH.

FIG. 8 is a conceptual diagram illustrating exemplary embodiments of a time-frequency resource in a communication system.

As shown in FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG. 7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g., a common RB grid) based on a reference frequency (e.g., point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g., scheduling information) of the PDSCH to a terminal through a PDCCH. The terminal may obtain the configuration information of the PDSCH by receiving the PDCCH (e.g., Downlink Control Information (DCI)). For example, the configuration information of the PDSCH may include a Modulation and Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g., DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g., Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g., in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, a communication system (e.g., NR communication system, 5G communication system, or 6G communication system) may support use scenarios such as enhanced Mobile BroadBand (eMBB), Ultra Reliable Low Latency Communication (URLLC), and massive Machine Type Communication (mMTC). The communication system (e.g., communication network) may support a transmission and reception point (TRP) technology (e.g., multi-TRP (mTRP) technology and/or single TRP (sTRP) technology). The communication system supporting the TRP technology may be referred to as a TRP system (e.g., mTRP system and/or sTRP system). In the present disclosure, 'TRP' may have a meaning including 'sTRP' and/or 'mTRP', and 'TRP' may refer to 'sTRP' or 'mTRP' depending on a context. A TRP may refer to an antenna set, antenna group, and/or antenna array. A TRP may be associated with a CORESET and/or a beam (e.g., beam group).

The mTRP technology may fall into a category of MIMO technology. The mTRP may have characteristics (e.g., cell-level characteristics) of macro cells, small cells, pico cells, and/or femto cells. The mTRP may perform data transmission for a terminal. In a case where a channel (e.g., link) with a non-uniform channel condition exists due to an obstacle and/or interference, the mTRP may mitigate the effect caused by the obstacle and/or interference. The mTRP may improve a data transmission rate for a terminal located in a cell edge.

mTRP-based communication may be performed based on a coherent joint transmission (CJT) scheme or a non-coherent joint transmission (NCJT) scheme. In the CJT scheme, a base station may be aware of channel information between each TRP and a terminal and may perform a preprocessing operation for data based on the channel information. In this case, an overhead caused by a transmission procedure of the channel information may increase, and synchronization constraints among the TRPs may occur. In the NCJT scheme, a base station may not need to be aware of channel information between each TRP and a terminal. The mTRP may transmit data to the terminal without performing a preprocessing operation such as phase compensation. The complexity of the NCJT scheme may be lower than the complexity of the CJT scheme.

NCJT-based mTRP communication may be performed based on a single-DCI scheme or a multi-DCI scheme. In the single-DCI scheme, PDSCHs transmitted by mTRP may be scheduled by a single DCI. The single DCI may be transmitted by one TRP of the mTRP. In the multi-DCI scheme, a PDSCH transmitted by each TRP may be scheduled by a DCI transmitted by the corresponding TRP. For example, a first PDSCH transmitted by a first TRP may be scheduled by a first DCI transmitted by the first TRP, and a second PDSCH transmitted by a second TRP may be scheduled by a second DCI transmitted by the second TRP. In other words, a plurality of PDSCHs may be scheduled using a plurality of DCIs.

In the single-DCI scheme, a terminal may expect to receive PDSCHs transmitted by different TRPs through different layers while using the same time and frequency resource. Alternatively, the terminal may expect to receive PDSCHs transmitted by different TRPs through different time resources (e.g., different time regions) while using the same frequency resource and the same layer. Alternatively, the terminal may expect to receive PDSCHs transmitted by different TRPs through different frequency resources (e.g., different frequency regions) while using the same time resource and the same layer.

In the multi-DCI scheme, PDSCH scheduling for each TRP may be performed by an individual DCI. PDSCHs scheduled by a plurality of DCIs may be fully overlapped or partially overlapped. Alternatively, PDSCHs scheduled by a plurality of DCIs may not be overlapped. In both the single-DCI scheme and the multi-DCI scheme, the DCI may include transmission configuration indicator (TCI) state information for PDSCH(s).

An indication/configuration of a TCI state for a terminal may be interpreted as an indication/configuration of a beam (e.g., a transmission beam and/or a reception beam). In other words, the TCI state may have a meaning corresponding to the beam. From the perspective of downlink (DL) communication, configuration of a TCI state may refer to configuration of a quasi-co-location (QCL). From the perspective of uplink (UL) communication, configuration of a TCI state may refer to configuration of a spatial filter. A unified TCI state may indicate (e.g., configure) a common beam regardless of DL communication and UL communication. Alternatively, a unified TCI state may indicate (e.g., configure) a common beam for each of DL communication and UL communication. The unified TCI may be referred to as 'UTCI'.

To enhance the reliability and/or robustness of mTRP communication, improvements such as PDCCH enhancements may be applied. Deployment scenarios for PDCCH enhancement may be classified into a single frequency network (SFN) and a non-SFN.

In the SFN scheme, different TRPs or different panels may transmit the same PDCCH using the same resource (e.g., the same time resource, the same frequency resource, and/or the same spatial resource). In other words, all TRPs or all panels may transmit the PDCCH using the same DMRS configuration, the same DMRS position, and/or the same DMRS sequence. In this case, from the reception perspective for the TRPs or panels, TCI states may be implicitly configured differently. The above-described exemplary embodiment may be performed based on a plurality of TCI states for a CORESET. Synchronization constraints for an ideal backhaul or a near-ideal backhaul among the TRPs may exist.

In the NSFN scheme, PDCCHs generated by the respective TRPs may be multiplexed in the time domain and/or the frequency domain, and the multiplexed PDCCHs may be transmitted to the terminal. This scheme may be an mTRP-based PDCCH repetition scheme. In the NSFN scheme, the number of encoded bits equal to the number of bits delivered through one PDCCH generated in each TRP may be divided among the TRPs, and the TRP-specific bits (e.g., encoded bits) may be transmitted through a different PDCCH candidate for each TRP. This scheme may correspond to an sTRP-based PDCCH transmission scheme.

In the mTRP-based PDCCH repetition scheme, a PDCCH may be duplicated according to the number of TRPs, and the PDCCHs may be transmitted in the same search spaces (e.g., search spaces having the same index) within different search space sets, each having the same number of PDCCH candidates. In this case, the search space sets may exist within the same CORESET or within different CORESETs. Since one TCI state may be associated with each CORESET, when PDCCHs are transmitted from different search spaces within the same CORESET, only one TCI state for the PDCCHs transmitted from the different search spaces may be indicated (e.g., configured). In this case, the terminal may receive one PDCCH from one TRP at a specific time.

When the PDCCHs are transmitted from the same search spaces within different CORESETs, the terminal may implicitly expect to receive the PDCCH from sTRP or mTRP depending on the number of TCI states (e.g., TCI states indicated or configured by the base station). In this case, a single PDCCH may be divided into as many PDCCHs as the number of TRPs, and the divided PDCCHs may be transmitted in different PDCCH candidates. In this case, an aggregation level and a combined aggregation level may be the same. In the above exemplary embodiment, the PDCCH candidates may be allocated to different CORESETs. A payload size for a combination of finally distributed PDCCHs may be the same as a payload size of a PDCCH transmitted from sTRP. Accordingly, in terms of decoding complexity, the sTRP-based PDCCH transmission scheme may be more advantageous than the mTRP-based PDCCH repetition scheme.

A terminal may perform mTRP communication or sTRP communication with a base station. The mTRP communication between the terminal and the base station may be performed via mTRP associated with the base station. The sTRP communication between the terminal and the base station may be performed via sTRP associated with the base station. The mTRP communication may be referred to as first TRP communication, and the sTRP communication may be referred to as second TRP communication. Alternatively, the mTRP communication may be referred to as second TRP communication, and the sTRP communication may be referred to as first TRP communication. The expression 'A terminal performs first TRP communication with a base station' may mean that the terminal performs mTRP communication or sTRP communication with the base station via one or more TRPs associated with the base station. The expression "A terminal performs second TRP communication with a base station" may mean that "the terminal performs sTRP communication or mTRP communication with the base station via one or more TRPs associated with the base station".

In a communication system, a unified TCI framework may be supported. A base station may transmit information of a pool (e.g., pool list) of TCI states to a terminal using RRC signaling. The terminal may receive the information of the pool (e.g., pool list) of TCI states through the RRC signaling of the base station. The base station may configure type information of TCI states for the terminal. The type information may indicate a joint DL/UL beam indication or a separate DL/UL beam indication. The joint DL/UL beam indication may be referred to as 'joint indication' or 'joint type'. The separate DL/UL beam indication may be referred to as 'separate indication' or 'separate type'.

When the joint type (e.g., joint indication) is configured, a TCI state (e.g., one TCI state) for DL and UL may be configured. In other words, a DL TCI state configuration and a UL TCI state configuration may be the same. The terminal may expect that a TCI state indicated by an information element included in PDSCH configuration information is applied to both DL (e.g., DL signal/channel) and UL (e.g., UL signal/channel). The term 'signal/channel' may refer to a signal and/or a channel. When the separate type (e.g., separate indication) is configured, TCI states for DL and UL, respectively, may be configured. In other words, a DL TCI state configuration may be distinguished from a UL TCI state configuration. The terminal may expect that a UL TCI state indicated by an information element included in UL BWP configuration information is applied to UL (e.g., UL signal/channel). A UL signal/channel may include PUSCH, PUCCH, and/or SRS.

After the pool (e.g., pool list) of TCI states is configured (e.g., indicated) by RRC signaling, the base station may indicate TCI state(s) (e.g., application of the TCI state(s)) using DCI (e.g., DCI signaling). Due to constraint on the DCI size (e.g., bits of DCI fields), the base station may preferentially activate candidate TCI state(s) using MAC signaling (e.g., MAC CE signaling). In other words, candidate TCI states, up to a certain number (e.g., a maximum number) that can be indicated or configured through DCI, may be preferentially activated by a MAC CE.

For the activated candidate TCI state(s), DCI may include a codepoint corresponding to a single TCI state or two TCI states according to a TCI state type (e.g., joint type or separate type). When the joint type is configured, a codepoint corresponding to a single TCI state may be delivered by the DCI. When the separate type is configured, a codepoint corresponding to two TCI states may be delivered by the DCI.

The unified TCI framework may be extended to support multiple TRPs. Up to two TRPs may be supported. A base station may configure up to 128 TCI states for a TCI state pool through RRC configuration. The base station may activate up to 32 TCI states corresponding to 8 codepoints using a MAC CE. The base station may indicate up to 4 TCI states for two TRPs using DCI.

To identify a DL channel state, a synchronization signal block (SSB) and/or a CSI-RS may be used. SSB may be periodically transmitted for time synchronization between a terminal and a base station. SSB may be transmitted even without a transmission request (e.g., transmission demand). Accordingly, transmission overhead of SSB may be lower than transmission overhead of CSI-RS. SSB may be transmitted within a specific frequency region. To identify a channel state for a frequency region to be measured by the terminal and/or an entire frequency region supported by a system, SSB may not be used due to a constraint on the transmission frequency region. In channel state measurement, each of SSB and CSI-RS may have advantages and disadvantages. Depending on a specific environment and/or a specific condition, SSB or CSI-RS may be used for measurement (e.g., identification) of a DL channel state.

Channel state reporting (e.g., CSI reporting) may be classified into three types. For example, channel state reporting may be classified into periodic channel state reporting, semi-persistent channel state reporting, and aperiodic channel state reporting. In periodic channel state reporting (e.g., periodic CSI reporting), a terminal may transmit a channel state report to a base station according to a periodicity configured by the base station. In semi-persistent channel state reporting (e.g., semi-persistent CSI reporting), a terminal may transmit a channel state report to a base station during a predetermined duration. In aperiodic channel state reporting (e.g., aperiodic CSI reporting), a terminal may transmit a channel state report to a base station according to a request (e.g., CSI request) from the base station. In other words, the channel state report may be intermittently transmitted.

The channel state report may include precoding matrix indicator (PMI), rank indicator (RI), layer indicator (LI), channel quality indicator (CQI), CSI reference resource indicator (CRI), SS/PBCH block resource indicator (SSBRI), reference signal received power (RSRP), and/or signal-to-interference-plus-noise ratio (SINR). The channel state report may include a capability index. The channel state report may include up to eight information items. CSI-RS may be used for measurement of a channel state. The base station may transmit, to the terminal, an RRC message including resource information (e.g., *CSI-ResourceConfig*, *CSI-MeasConfig*) for CSI-RS. The terminal may receive the RRC message from the base station, and may obtain the resource information for CSI-RS included in the RRC message.

The resource information for CSI-RS may include at least one of a time resource through which CSI-RS is transmitted, a frequency resource through which CSI-RS is transmitted, a transmission periodicity of CSI-RS, or a resource type (e.g., a periodic type, a semi-persistent type, an aperiodic type) of CSI-RS. In addition, the RRC message may include configuration information (e.g., *CSI-ReportConfig*) for CSI reporting. A resource type of CSI-RS and a type of CSI reporting (e.g., CSI measurement reporting) may be independently configured. For example, when aperiodic CSI reporting is required, the terminal may perform measurements on all CSI-RS resources regardless of whether each resource is a periodic CSI-RS resource, a semi-persistent CSI-RS resource, or an aperiodic CSI-RS resource, and may transmit, to the base station, an aperiodic CSI report including measurement results. As another example, when periodic CSI reporting is required, the terminal may perform measurements on periodic CSI-RS resources, and may transmit, to the base station, periodic CSI reports including measurement results. As still another example, when semi-persistent CSI reporting is required, the terminal may perform measurements on periodic CSI-RS resources and/or semi-persistent CSI-RS resources, and may transmit, to the base station, an aperiodic CSI report including measurement results.

Configuration of CSI-RS resources may have a hierarchical structure. In other words, CSI-RS resources may be hierarchically configured. To indicate a minimum unit for obtaining channel information, a set of RE(s) having a specific pattern in the time domain and the frequency domain may be defined as a resource. To indicate (e.g., configure) a set of resources collectively, a resource set may be defined. Separate IDs may be allocated to distinguish each resource and each resource set. Different resource sets may include different resources. Alternatively, different resource sets may include the same resource(s). To flexibly utilize resources and resource sets, one group (e.g., a resource set list) including resource sets may be configured, and the one group may be defined based on resource configuration information (e.g., *CSI-ResourceConfig*). A specific ID for a set of resource sets (e.g., a resource set list) may be configured.

A set of CSI-RS resource sets may be defined as a 'CSI-RS resource set list' or a 'set list'. In the present disclosure, periodic may be referred to as 'P', semi-persistent may be referred to as 'SP', and aperiodic may be referred to as 'AP'. In other words, periodic CSI-RS, semi-persistent CSI-RS, and aperiodic CSI-RS may be respectively referred to as P CSI-RS, SP CSI-RS, and AP CSI-RS, and periodic CSI report, semi-persistent CSI report, and aperiodic CSI report may be respectively referred to as P CSI report, SP CSI report, and AP CSI report. CSI-RS resource(s) according to a type (e.g., P, SP, AP) may be configured in units of CSI-RS resource set lists. CSI-RS resource set(s) and/or CSI-RS resource(s) belonging to the same CSI-RS resource set list may be interpreted as having the same type. Since a CSI-RS resource set list is configured according to a type, a CSI report may be requested or transmitted for each CSI-RS resource set list. Configuration of CSI-RS resources may have a hierarchical structure in the order of 'CSI-RS resource → CSI-RS resource set → CSI-RS resource set list'. One or more CSI-RS resources may belong to a CSI-RS resource set, and one or more CSI-RS resource sets may belong to a CSI-RS resource set list.

Configuration information of CSI reporting (i.e., CSI report configuration information) may be transmitted to a terminal together with configuration information of CSI-RS resources. Depending on a purpose of CSI measurement (e.g., channel measurement, interference measurement), configuration information (e.g., allocation information) for different CSI-RS resource set lists may be transmitted to the terminal. Configuration information of CSI reporting may include all information required for the terminal to transmit CSI reports. For example, the configuration information of CSI reporting may include at least one of a CSI reporting type (e.g., P, SP, AP), a time resource for which CSI measurement is required, a frequency resource for which CSI measurement is required, or types of information included in CSI reports. A channel through which a CSI report is transmitted may vary depending on the size of the CSI report. For example, a P CSI report may be transmitted through a PUCCH. An SP CSI report may be transmitted through a PUCCH or a PUSCH. An AP CSI report may be transmitted through a PUSCH. The size of an AP CSI report may be greater than that of an SP CSI report, and the size of an SP CSI report may be greater than that of a P CSI report.

A CSI reporting procedure for each type may be performed as follows. A base station may transmit, to a terminal, an RRC message including CSI measurement configuration information, CSI-RS resource configuration information, and/or CSI report configuration information. The terminal may obtain the CSI measurement configuration information, the CSI-RS resource configuration information, and/or the CSI report configuration information from the base station. In a P CSI reporting procedure, the terminal may measure a DL channel based on a P CSI-RS without additional triggering signaling (e.g., triggering signal), and may transmit, to the base station, a CSI report including a measurement result according to a CSI reporting periodicity configured by RRC signaling (e.g., an RRC message).

In an SP CSI reporting procedure, a base station may transmit, to a terminal, information (e.g., MAC CE) indicating activation of SP CSI measurement/reporting. When the SP CSI measurement/reporting is activated, the terminal may measure a DL channel based on a P CSI-RS, and may transmit, to the base station, a CSI report including a measurement result according to a CSI reporting periodicity configured by RRC signaling (e.g., an RRC message). Transmission of the CSI report may continue until information (e.g., MAC CE) indicating deactivation of SP CSI measurement/reporting is received from the base station. Activation signaling and/or deactivation signaling for an SP CSI measurement/reporting procedure may be required. During an interval between the activation signaling and the deactivation signaling, the terminal may measure a DL channel based on an SP CSI-RS, and may transmit, to the base station, a CSI report including measurement results.

In an AP CSI reporting procedure, a base station may transmit, to a terminal, a signaling message (e.g., DCI or MAC CE) for triggering AP CSI measurement/reporting. The signaling message may indicate triggering of one CSI report. The terminal may receive the signaling message from the base station, and may determine that AP CSI measurement/reporting is triggered based on the signaling message. An AP CSI-RS resource measured by the terminal may be an AP CSI-RS resource transmitted after N slots from a slot in which the signaling message for triggering AP CSI measurement/reporting is received, and the AP CSI report may be transmitted after M slots from the slot in which the signaling message for triggering AP CSI measurement/reporting is received. Each of N and M may be a natural number. Information on N indicating the AP CSI-RS resource and/or information on M indicating the timing of the AP CSI report may be transmitted to the terminal through RRC signaling. Information on N indicating the AP CSI-RS resource and/or information on M indicating the timing of the AP CSI report may be transmitted to the terminal together with the CSI measurement configuration information, CSI-RS resource configuration information, and/or CSI report configuration information.

A terminal may individually perform data transmission using a plurality of panels. In other words, the terminal may perform data transmission independently using each of the plurality of panels. The terminal may transmit, to a base station, information required for data transmission for each panel. The base station may obtain, from the terminal, the information required for data transmission for each panel. One of the pieces of information required for data transmission for each panel may be power headroom information (e.g., a power headroom report (PHR)). The power headroom information may indicate remaining power excluding power used by the terminal for data transmission. The power headroom information may be configured in units of subframes. Transmit power for data may correspond to a predicted value (e.g., predicted transmit power), not a value actually used for transmission (e.g., actual transmit power). The power used for actual data transmission cannot exceed maximum transmit power supported by the terminal. The predicted transmit power may exceed the maximum transmit power supported by the terminal. The power headroom information reported by the terminal may have a positive value or a negative value.

A PHR may be delivered from a terminal to a base station through the MAC layer. In other words, the PHR may be included in a MAC CE. A power headroom (PH) index (e.g., a PH value) may be defined in a table (e.g., mapping information between PH indexes and transmit power ranges) in the technical specifications. In the table, a PH index may be mapped to each transmit power range. For example, a PH index may indicate PH 0, and PH 0 may be mapped to -23 dB ≤ PH < -22 dB in the table. The size of a PHR field included in the MAC CE may vary depending on the number of PH indexes. The terminal may transmit a PHR for each panel. A path loss associated with the PHR may be determined based on a reference signal (RS) associated with beam configuration (e.g., a TCI state and/or QCL). Whether PHR transmission for each panel is supported may be determined based on a capability of the terminal. For example, a certain terminal may support PHR transmission for each panel, and another terminal may not support PHR transmission for each panel. The terminal may report, to the base station, information on whether PHR transmission for each panel is supported. As a parameter indicating whether PHR transmission for each panel is supported, a parameter (e.g., *twoPHRmode*) indicating whether PHR transmission for mTRP is supported may be used. In an mTRP environment (e.g., an mTRP system), methods for improving uplink communication performance are required.

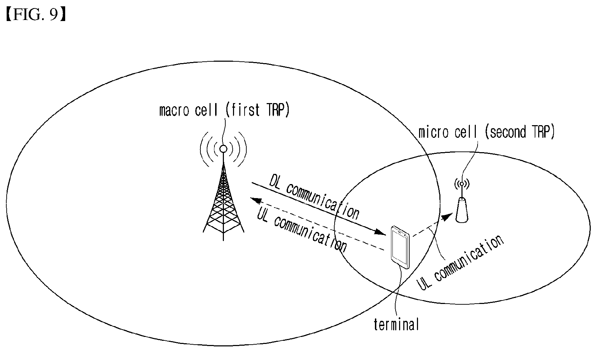

FIG. 9 is a conceptual diagram illustrating an exemplary embodiment of an asymmetric TRP system.

As shown in FIG. 9, a macro cell (e.g., a macro TRP, a first TRP) may cover a relatively large area, and a micro cell (e.g., a micro TRP, a second TRP) may cover a relatively small area. DL traffic (e.g., traffic for DL data transmission) may be greater than UL traffic (e.g., traffic for UL data transmission). Accordingly, transmission resources may be preferentially configured for DL transmission. The transmit power of a base station may be greater than the transmit power of a terminal, and DL coverage may be wider than UL coverage.

A micro cell (e.g., a second TRP) adjacent to the terminal may be present. Power efficiency of UL communication with the adjacent micro cell may be better than that of UL communication with the macro cell (e.g., the first TRP) connected to the terminal. A TRP may be an entity that transmits and receives data with the terminal. A TRP and a cell may be used interchangeably. A TRP may be used with the same meaning as a cell depending on context. A cell may be used with the same meaning as a TRP depending on context. A specific TRP (e.g., a serving cell) may perform a control function for another TRP (e.g., a TRP controlled by the specific TRP). The specific TRP may perform a data scheduling function.

The terminal may perform UL communication with the micro cell while performing DL communication with the macro cell. When channel reciprocity between a DL channel for the macro cell and a UL channel for the micro cell is established, the terminal may determine (e.g., configure) transmit power for the UL channel of the micro cell based on path loss determined based on an RS received from the macro cell. Alternatively, in an asymmetric TRP system, a terminal may perform DL communication with one TRP (e.g., a macro cell), and may perform UL communication with a plurality of TRPs (e.g., the macro cell and a micro cell). In the above-described asymmetric TRP system, the terminal may determine (e.g., configure) transmit power for each UL channel of the macro cell and the micro cell based on path loss determined based on an RS received from the macro cell. In this case, UL transmit power for the micro cell may be set to a high level. In other words, since the UL transmit power for the micro cell is determined based on a channel state between the macro cell and the terminal, rather than a channel state between the micro cell and the terminal, the UL transmit power for the micro cell may be set to a high level. Even though UL communication (e.g., transmission of a channel and/or a signal) with the micro cell is possible with low transmit power, the UL communication with the micro cell may be performed with high transmit power. Accordingly, power consumption of the terminal may increase unnecessarily, and UL communication with high transmit power may cause interference to other terminals.

To solve the above-described problem, an additional method for configuring UL transmit power in an asymmetric TRP system may be required. The asymmetric TRP system may include mTRP, wherein an sTRP among the mTRP performs DL communication and the mTRP perform UL communication. The sTRP performing DL communication may be referred to as a DL sTRP. The mTRP performing UL communication may be referred to as UL mTRP. A method of power control (e.g., power configuration, power determination) for UL communication in the asymmetric TRP system is described. In the present disclosure, a power control method for a PUSCH is described, but the power control method for the PUSCH may be applied to another UL channel and/or another UL signal.

In an asymmetric TRP system, an additional path loss offset may be used for UL communication with a UL TRP. The UL TRP may refer to a TRP that is a target of UL communication. The path loss offset may be referred to as a path loss (PL) offset. The path loss offset may refer to a path loss offset value. The path loss offset and the path loss offset value may be used interchangeably. In the present disclosure, a signaling method for a path loss offset, a method for associating a path loss offset with a TCI state, and the like are proposed.

A base station may transmit configuration information for UL transmit power corresponding to a TCI configuration (e.g., a TCI state type) to a terminal through signaling (e.g., RRC signaling). The terminal may receive the configuration information for UL transmit power corresponding to the TCI configuration through signaling from the base station. The TCI state type may be a joint type or a separate type. A TCI state of the joint type may be referred to as a joint TCI state. A TCI state of the separate type may be referred to as a separate TCI state.

A UL TCI state list (e.g., a UL TCI state pool) may be additionally configured according to the TCI state type. When the TCI state type is the joint type, the terminal may expect a DL TCI state pool to follow a UL TCI state pool. The TCI state list may be transmitted by DL-dedicated signaling (e.g., PDSCH configuration). When the TCI state type is the separate type, the base station may configure UL TCI state(s) for the terminal separately from DL TCI state(s). The UL TCI state(s) may be configured by UL-dedicated signaling (e.g., *BWP-UplinkDedicated*). The terminal may perform UL communication based on the UL TCI state(s). The UL communication (e.g., UL transmission) may include PUSCH transmission, SRS transmission, and/or PUCCH transmission. The UL TCI state(s) may be interpreted as a UL TCI state list or a UL TCI state pool depending context. The DL TCI state(s) may be interpreted as a DL TCI state list or a DL TCI state pool depending context.

When a type of a unified TCI state is indicated (e.g., configured), power configuration information for UL communication (e.g., power control information, a power configuration parameter, a power control parameter, or a power parameter list) may be indicated to (e.g., configured for) the terminal. The type for the unified TCI state may be configured for the terminal together with a power parameter list for UL communication. The power parameter list may be distinguished by an identifier (ID). The power parameter list may include parameters required for UL communication (e.g., power control for UL communication) (e.g., alpha (α), p0, a closed loop (CL) index, and the like).

When the base station supports a unified TCI state (e.g., a unified TCI framework), power parameter list(s) for each TCI state (e.g., candidate power parameter list(s)) may be transmitted to the terminal. The terminal may receive the power parameter list(s) for each TCI state (e.g., candidate power parameter list(s)) through signaling from the base station. In the present disclosure, a power parameter list may refer to a power parameter list for UL communication.

When the base station configures TCI state(s) of the joint type for the terminal, the base station may transmit a power parameter list and/or a power parameter list ID corresponding to each TCI state to the terminal. In other words, "information on TCI state(s) for the joint type and a power parameter list corresponding to each TCI state" or "information on TCI state(s) for the joint type, a power parameter list corresponding to each TCI state, and a power parameter list ID corresponding to each TCI state" may be transmitted together to the terminal. A power parameter list ID may refer to an ID of a power parameter list. The power parameter list ID may refer to a UL power control ID (e.g., *Uplink-powerControlID*). When the base station configures TCI state(s) of the separate type for the terminal, the base station may transmit a power parameter list and/or a power parameter list ID corresponding to each TCI state to the terminal. In other words, "information on TCI state(s) of the separate type and a power parameter list corresponding to each TCI state" or "information on TCI state(s) of the separate type, a power parameter list corresponding to each TCI state, and a power parameter list ID corresponding to each TCI state" may be transmitted together to the terminal. Alternatively, the base station may transmit common power parameter list(s) for UL communication to the terminal through signaling regardless of TCI states. The terminal may receive the common power parameter list(s) through signaling from the base station. The common power parameter list(s) may be used for UL communication corresponding to all TCI states.

When the base station performs communication with the terminal based on a unified TCI state, the base station may transmit a power parameter list applicable regardless of a TCI state (e.g., a common power parameter list) to the terminal through signaling. Alternatively, when the base station performs communication with the terminal based on a joint TCI state or a separate TCI state, the base station may transmit a power parameter list for each TCI state to the terminal through signaling. A power parameter list and a type configuration of a TCI state (e.g., type configuration information) may be included in one signaling message, and the base station may transmit the one signaling message to the terminal. The terminal may receive the one signaling message from the base station and may identify the power parameter list and the type configuration of the TCI state (e.g., the type configuration information) included in the one signaling message.

When the terminal is capable of performing measurement (e.g., reference signal (RS) measurement) on a TRP that is a target of UL communication (e.g., a UL TRP), the terminal may determine transmit power based on a result of the measurement. In an asymmetric TRP system, a situation in which the terminal is unable to receive an RS from the UL TRP may occur. In other words, the terminal may be unable to perform measurement on the UL TRP in the asymmetric TRP system. In the above situation, methods for obtaining (e.g., configuring, indicating, or determining) a power offset (e.g., a path loss offset) for UL communication with the UL TRP are required. In the present disclosure, methods for configuring a power offset for UL communication with a UL TRP in an asymmetric TRP system are proposed.

Transmit power may vary according to a type of a TCI state (e.g., joint or separate). In an asymmetric TRP system, a terminal may receive control information from a DL TRP (e.g., a TRP that is a target of DL communication) and may perform UL communication with one or more UL TRPs based on the control information. Power parameters (e.g., a power parameter list) configured together with a TCI state may be referred to as "other UL transmission parameters". The other UL transmission parameters may include at least one of α, p0, or a CL index. In addition, the other UL transmission parameters may further include other parameter(s) for power control in addition to the above parameters. Configuring power parameters (e.g., a power parameter list) together with a TCI state may mean that the power parameters (e.g., the power parameter list) are associated with (e.g., mapped to) the TCI state.

○ **Proposal #1: Method for configuring (e.g., indicating) a path loss offset based on whether a power parameter (e.g., the path loss offset) is associated with a TCI state**

A configuration scheme of a path loss offset for a terminal may be classified into Scheme #1 and Scheme #2 based on whether a power parameter is associated with a TCI state. The path loss offset may be a type of power parameter. In Scheme #1, the path loss offset may be configured to be associated with a TCI state. In Scheme #2, the path loss offset may be configured regardless of a TCI state. In other words, in Scheme #2, the path loss offset may be configured independently of a TCI state. In Scheme #2, the path loss offset may be a common path loss offset applicable to all TCI states. In Proposal #1, the path loss offset may be used to determine transmit power for UL communication with a UL TRP in an asymmetric TRP system.

In Scheme #1, a base station may transmit a TCI state configuration (e.g., a TCI state configuration message) including TCI state information and a path loss offset to the terminal through signaling (e.g., RRC signaling). The terminal may receive the TCI state configuration through signaling from the base station and may identify the TCI state information and the path loss offset included in the TCI state configuration. The path loss offset may be associated with the TCI state information. For example, when the TCI state configuration includes N TCI states, N path loss offsets respectively associated with the N TCI states may be included in the TCI state configuration.

In Scheme #2, the base station may transmit DCI including a path loss offset (e.g., a single path loss offset) to the terminal. The terminal may receive the DCI from the base station and may identify the path loss offset included in the DCI. Alternatively, in Scheme #2, the base station may transmit MAC CE including a path loss offset (e.g., a single path loss offset) to the terminal. The terminal may receive the MAC CE from the base station and may identify the path loss offset included in the MAC CE. The MAC CE may be used to indicate activated TCI state(s) and/or a path loss offset. Alternatively, in Scheme #2, the base station may transmit an RRC message including a path loss offset (e.g., a single path loss offset) to the terminal. The terminal may receive the RRC message from the base station and may identify the path loss offset included in the RRC message. The path loss offset may be included in an RRC message for transmission of BWP-specific information. In other words, the path loss offset may be included in the BWP-specific information.

In the present disclosure, a path loss offset that is not associated with a TCI state may be referred to as a common path loss offset. The common path loss offset may be applied to determine transmit power for UL communication regardless of TCI states. A path loss offset associated with each TCI state may be referred to as a dedicated path loss offset (or a TCI path loss offset). The base station may transmit at least one of a common path loss offset or a dedicated path loss offset to the terminal through signaling. The terminal may receive at least one of a common path loss offset or a dedicated path loss offset through signaling from the base station.

A value of the common path loss offset may be a value within a wide range. The value of the common path loss offset may be an absolute value. A value of the dedicated path loss offset may be configured as a relative value based on the value of the common path loss offset. The common path loss offset (e.g., the value of the common path loss offset) may be transmitted through RRC configuration (e.g., RRC signaling) and/or MAC CE configuration (for example, MAC CE signaling). The dedicated path loss offset (e.g., the value of the dedicated path loss offset) may be transmitted through MAC CE and/or DCI. In the present disclosure, a path loss offset may be interpreted as a common path loss offset or a dedicated path loss offset depending on context. A path loss offset value may refer to a value of a path loss offset.

### ○ Proposal #2: Method 1 for configuring a path loss offset based on RRC signaling

### • Proposal #2-1

A base station may generate a power parameter list (e.g., another UL transmission parameter list) including a path loss offset and may transmit the power parameter list to the terminal through signaling. The terminal may receive the power parameter list through signaling from the base station and may identify the information included in the power parameter list. The terminal may determine transmit power based on the identified information and may perform UL communication with a UL TRP using the transmit power.

TCI state information (e.g., TCI state configuration information) may include at least one of a TCI state ID, a power parameter list ID (e.g., a power parameter list ID associated with the TCI state ID), or a power parameter list (e.g., a power parameter list corresponding to the power parameter list ID). The base station may inform the terminal of the TCI state ID, the power parameter list ID, and/or the power parameter list by transmitting the TCI state information to the terminal through signaling. A path loss offset may be included in the TCI state information, which may be configured through RRC signaling.

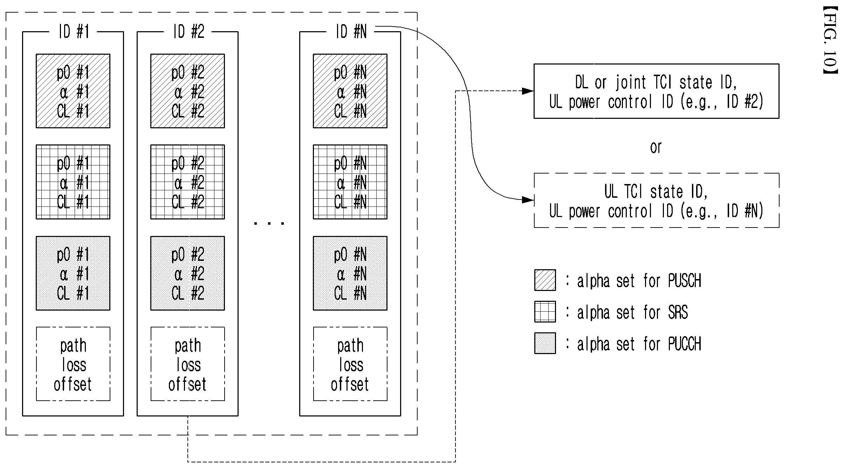

FIG. 10 is a conceptual diagram illustrating exemplary embodiments of a power parameter list including a path loss offset.

As shown in FIG. 10, a power parameter list may include alpha, p0, a CL index, and/or a path loss offset (e.g., a path loss offset value). The parameter(s) included in the power parameter list may be used for UL communication (e.g., PUSCH transmission, SRS transmission, PUCCH transmission, and the like). One power parameter list may include an alpha set for each type of UL communication. For example, one power parameter list may include an alpha set for PUSCH transmission, an alpha set for SRS transmission, and/or an alpha set for PUCCH transmission. The alpha set may include alpha, p0, and/or CL (e.g., a CL index). The path loss offset may exist in the power parameter list independently of the alpha sets. A single path loss offset may be included in the power parameter list. The path loss offset may be applied regardless of a type of UL communication. In other words, the path loss offset may be commonly applied to all types of UL communications.

An ID for each power parameter list may be configured. The power parameter list ID may be expressed as a UL power control ID. In the exemplary embodiment of FIG. 10, the UL power control ID may refer to the power parameter list ID. The power parameter list ID may be associated with a DL or joint TCI state ID or a UL TCI state ID. N power parameter list IDs may be configured. N may be equal to the maximum number of UL TCI states. N may be a natural number.

### • Proposal #2-2

The base station may transmit a path loss offset (e.g., a value of the path loss offset) to the terminal together with TCI state configuration. According to Proposal #2-2, the signaling for TCI state configuration may be changed to deliver the path loss offset to the terminal. Unlike Proposal #2-2, in Proposal #2-1 described above, a power parameter list (e.g., a power parameter list including a path loss offset) may be delivered to the terminal without changing signaling for TCI state configuration. For example, according to Proposal #2-2, the TCI state configuration may include a TCI state ID, QCL information, physical cell identifier (PCI) information, a UL power control ID, a path loss offset (e.g., a power control offset), and the like. The path loss offset may be included in TCI state information, which may be configured through RRC signaling.

### ○ Proposal #3: Method 2 for configuring a path loss offset based on RRC signaling

A base station may transmit an RRC message including a common path loss offset applicable regardless of TCI states (e.g., an RRC message including *BWP-UplinkDedicated*) to the terminal. In other words, the common path loss offset may be included in UL BWP-dedicated configuration information (e.g., UL BWP-dedicated information), which is an RRC configuration. The common path loss offset may be applied to all TCI states. The terminal may receive the RRC message from the base station and may identify the common path loss offset included in the RRC message. Proposal #3 may not be applicable to a terminal that does not support a unified TCI state.

When a power parameter list including a path loss offset is not configured for the terminal (e.g., when a power parameter list indicated to the terminal does not include a path loss offset) or when a TCI state configuration including a path loss offset is not indicated to the terminal (e.g., when TCI state configuration indicated to the terminal does not include a path loss offset), the terminal may expect to receive an RRC message including a common path loss offset (e.g., *BWP-UplinkDedicated*). In other words, the terminal may expect that the RRC message (e.g., *BWP-UplinkDedicated*) received from the base station includes a common path loss offset.

The terminal may basically support Proposal #3. When a path loss offset is not indicated to the terminal by signaling according to Proposal #3, the terminal may expect that a path loss offset is indicated to the terminal by signaling based on Proposal #2-1 or Proposal #2-2.

### ○ Proposal #4: Method for configuring a path loss offset based on MAC signaling (e.g., MAC CE) and/or PHY signaling (e.g., DCI)

### • Proposal #4-1

Latency according to a method for indicating a path loss offset based on RRC signaling (e.g., Proposal #2) may be greater than latency according to a method for indicating a path loss offset based on MAC signaling and/or PHY signaling. In terms of latency, a gain of PHY signaling may be greater than a gain of MAC signaling. A size constraint of PHY signaling may be stricter than that of MAC signaling.

MAC CE may be used for activation or deactivation of a TCI state. DCI may be used to indicate a TCI state. A power parameter list (e.g., a path loss offset) and/or update information for the power parameter list (e.g., the path loss offset) may be indicated (e.g., configured) by MAC CE and/or DCI. The update information for the power parameter list may include at least a path loss offset.

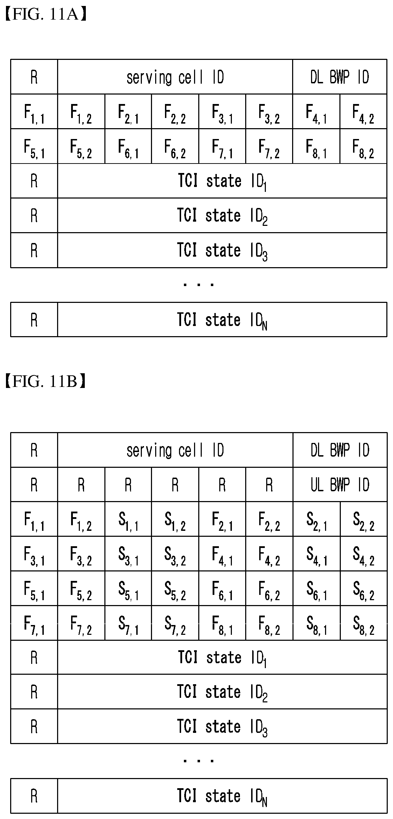

FIG. 11A is a conceptual diagram illustrating exemplary embodiments of MAC CE for activation of a joint-type TCI state, and FIG. 11B is a conceptual diagram illustrating exemplary embodiments of MAC CE for activation of a separate-type TCI state.

As shown in FIG. 11A and FIG. 11B, in a unified TCI framework, TCI state activation may be indicated by MAC CE. The maximum number of activated TCI states may vary according to a TCI state type (e.g., a joint type or a separate type). In the case of the joint type (e.g., a TCI state of the joint type), up to 16 TCI states may be activated, and up to two TCI states may be mapped to one codepoint. In the case of the separate type (e.g., a TCI state of the separate type), up to 32 TCI states may be activated, and up to four TCI states may be mapped to one codepoint.

The base station may transmit MAC CE including a path loss offset to the terminal. To configure the path loss offset through MAC CE, values of the path loss offset (e.g., path loss offset values) may be determined based on quantization levels, and the path loss offset values determined based on the quantization levels may be included in a path loss offset list. In other words, a path loss offset list including path loss offset values determined based on quantization levels may be generated. The path loss offset list may be preconfigured for the base station (e.g., TRP) and/or the terminal. Alternatively, the path loss offset list may be configured (e.g., indicated) for the terminal through signaling from the base station.

An index of each path loss offset value included in the path loss offset list may be configured. The base station may transmit MAC CE including an index of a path loss offset value to the terminal. The index of the path loss offset value may be represented by bit(s) in the MAC CE. Alternatively, the path loss offset value may be converted into a binary form, the converted path loss offset value may be represented by bit(s) in the MAC CE, and a sign (e.g., positive (+) or negative (-)) of the converted path loss offset value may be represented by a bit (e.g., a reserved bit) in the MAC CE.

One or more path loss offset values for each TCI state may be included in the MAC CE. One or more path loss offset values for each TRP may be included in the MAC CE. When path loss offset values are allocated to respective TCI states, the maximum number of allocated path loss offset values may vary according to a TCI type. In the case of the joint TCI type, up to 16 path loss offset values may be allocated, and 16 bits may be additionally required to represent signs of the 16 path loss offset values. In the case of the separate TCI type, up to 32 path loss offset values may be allocated, and 32 bits may be additionally required to represent signs of the 32 path loss offset values.

For example, the path loss offset list may be configured as shown in Table 2 below.

**[Table 2]**

| index | Path loss offset value |
|---|---|
| 0 | -6 dB |
| 1 | -3 dB |
| 2 | +3 dB |
| 3 | +6 dB |

When the path loss offset list is configured as shown in Table 2, 2×16 bits or 2×32 bits may be required in a MAC CE to configure path loss offset values using the MAC CE. To indicate the signs of the path loss offset values, 16 bits or 32 bits may be further required in the MAC CE.

A codepoint may be mapped to TCI state(s). Based on the proposed methods, a codepoint may be mapped to a path loss offset value. Information (e.g., information having a size of 1 bit) for indicating whether a path loss offset value corresponding to each TCI state is configured may be required. The MAC CE may further include information for indicating whether a path loss offset value for each TCI state is configured.

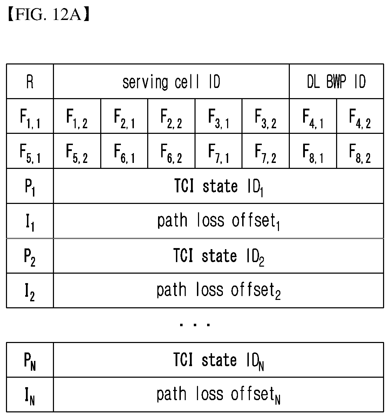

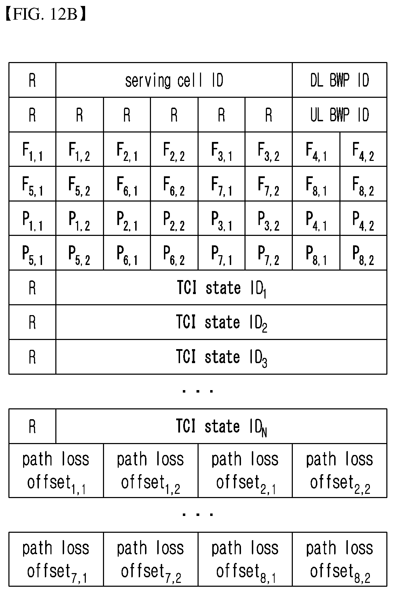

FIG. 12A is a conceptual diagram illustrating exemplary embodiments of MAC CE for activation of a joint-type TCI state, and FIG. 12B is a conceptual diagram illustrating exemplary embodiments of MAC CE for activation of a separate-type TCI state.

As shown in FIG. 12A and FIG. 12B, MAC CE may further include fields for indicating a path loss offset. The fields for indicating the path loss offset may include a path loss offset field, a P field, and/or an I field. The path loss offset field may indicate an actual value (e.g., an absolute value) for the path loss offset. Alternatively, when a path loss offset list is configured as shown in Table 2, the path loss offset field may be configured as an index indicating a specific path loss offset value in the path loss offset list. The P field may indicate whether a path loss offset value corresponding to (e.g., associated with or mapped to) a TCI state ID exists in the MAC CE. A size of the P field may be 1 bit. For example, a P1 field set to a first value (e.g., 0) may indicate that a path loss offset (e.g., a path loss offset value) corresponding to TCI state ID1 does not exist in the MAC CE, and a P1 field set to a second value (e.g., 1) may indicate that a path loss offset (e.g., a path loss offset value) corresponding to TCI state ID1 exists in the MAC CE.

The I field may indicate a sign (e.g., positive (+) or negative (-)) of the path loss offset value. A size of the I field may be 1 bit. For example, an I1 field set to a first value (e.g., 0) may indicate that a sign of a path loss offset value corresponding to TCI state ID1 is positive (+), and an I1 field set to a second value (e.g., 1) may indicate that a sign of a path loss offset value corresponding to TCI state ID1 is negative (-).

In the exemplary embodiment of FIG. 12A, a size of the path loss offset field may be 7 bits, and the path loss offset field may indicate an actual value (e.g., an absolute value) of a path loss offset. In the exemplary embodiment of FIG. 12A, MAC CE (e.g., a MAC CE message) may include the path loss offset field, the P field, and the I field. In the exemplary embodiment of FIG. 12A (e.g., when the joint type is used), the number N of TCI states may be 16. In the exemplary embodiment of FIG. 12B, a size of the path loss offset field may be 2 bits, and the path loss offset field may be configured as an index indicating a specific path loss offset value in a path loss offset list (e.g., the path loss offset table defined in Table 2). In the exemplary embodiment of FIG. 12B, the MAC CE may include the path loss offset field and the P field. In other words, in the exemplary embodiment of FIG. 12B, the MAC CE may not include the I field.

A path loss offset value may be indicated for each TCI state. Alternatively, a plurality of path loss offset values (e.g., two path loss offset values) may be mapped to one codepoint. Unlike the above-described exemplary embodiments, a path loss offset value may be indicated for each TRP. In this case, one path loss offset value may be considered to be mapped to one codepoint.

A path loss offset value may be configured to be mapped in a one-to-one manner to an activation codepoint for a TCI state. Alternatively, a path loss offset value may be configured to be mapped in a many-to-one manner to an activation codepoint for a TCI state. When a path loss offset value is configured to be mapped in a many-to-one manner to an activation codepoint of a TCI state, each path loss offset value may be associated with each TRP. When the terminal supports up to four TRPs and the joint TCI state is indicated, one codepoint may be associated with up to four TCI states, and path loss offset values may exist in a number corresponding to the number of TCI states associated with the one codepoint.

### • Proposal #4-2

When MAC CE (e.g., a MAC CE message) includes a single TCI state, the MAC CE may be used for indication rather than activation of the TCI state. In a general procedure of a unified TCI state framework, MAC CE may activate a plurality of TCI states associated with a plurality of codepoints, and DCI may indicate a specific codepoint (e.g., a single codepoint) to a terminal. According to the above-described procedure, the terminal may perform communication (e.g., UL communication and/or DL communication) with one or more TRPs using TCI states associated with the single codepoint.

Information on a path loss offset (e.g., a path loss offset value) may be indicated by DCI (e.g., reserved bit(s) in the DCI) instead of MAC CE. For example, bit(s) included in the DCI (e.g., one bit) may indicate whether a path loss offset value associated with a TCI state (e.g., a TCI state indicated by the DCI) is used. Since information temporally adjacent to uplink scheduling (e.g., a scheduled uplink resource) is DCI (e.g., DCI for TCI indication) rather than MAC CE (e.g., MAC CE for TCI indication and/or activation), it may be necessary for the base station to inform the terminal in advance whether a path loss offset value associated with a TCI state is applied depending on a situation. The terminal may not know whether scheduling information is information for communication with another TRP, and it may be necessary for the base station to dynamically inform the terminal whether the path loss offset value is applied in consideration of an environment of the terminal.

A path loss offset value may depend on a location of the terminal. Accordingly, the base station may directly configure (e.g., indicate) the path loss offset value to the terminal using DCI. In other words, regardless of TCI state(s), the base station may transmit DCI including a path loss offset value and/or a TCI state indication to the terminal. Fields for indicating a path loss offset (e.g., a path loss offset value) included in DCI may be the same as or similar to fields of the exemplary embodiment of FIG. 12A and/or the exemplary embodiment of FIG. 12B (e.g., the path loss offset field, the P field, and/or the I field).

A path loss offset value may be included in DCI for uplink scheduling (e.g., DCI including a UL grant). In order to maximize utilization of location information of the terminal before uplink scheduling, the path loss offset value may be included in DCI for uplink scheduling. The path loss offset value may be determined based on the location of the terminal. In order to distinguish from DCI for TCI state indication (e.g., a legacy DCI format) and/or prevent conflict with operation of a legacy terminal, a separate DCI format including a path loss offset value may be defined. The DCI format including a path loss offset value may include information on a codepoint associated with an activated TCI state. A codepoint included in the DCI format may be associated with a path loss offset value. The terminal may receive the above-described DCI (e.g., the DCI format), may identify the path loss offset value included in the DCI, and may perform UL communication with a TRP (e.g., a UL TRP) using transmit power determined based on the path loss offset value.

### • Proposal #4-3

According to Proposal #4-1 and/or Proposal #4-2 described above, at least a TCI state and a path loss offset value are associated with a single codepoint, and it may be difficult (or impossible) to independently indicate a path loss offset value (because of the association). To solve the above problem, a base station may transmit, to a terminal, MAC CE including a list (e.g., a path loss offset list) including path loss offset value(s) independent of TCI states. The terminal may receive the MAC CE from the base station and may identify the path loss offset list included in the MAC CE. Each path loss offset value may be mapped to one codepoint, and each path loss offset value may be activated based on the mapping relationship. Thereafter, in a transmission procedure of DCI for TCI state indication, the DCI may include information indicating a codepoint associated with (e.g., mapped to) a specific path loss offset value.

MAC CE may include information on TCI states and information on path loss offset values, and the path loss offset values may be configured independently of the TCI states within the MAC CE. In other words, the path loss offset values may not have an association relationship with the TCI states within the MAC CE. DCI transmitted after the MAC CE may include information on codepoints corresponding to respective TCI states and path loss offset values. For example, DCI may include N codepoints for activation of TCI states and M codepoints for activation (e.g., indication) of path loss offset values. Each of N and M may be a natural number. For example, N may be 8. Bit(s) (e.g., a field) indicating the N codepoints for activation of TCI states and bit(s) (e.g., a field) indicating the M codepoints for activation (e.g., indication) of path loss offset values may be configured independently within the DCI.

### ○ Proposal #5: Method for configuring a path loss offset based on RRC signaling, MAC signaling, and/or PHY signaling

### • Proposal #5-1

Proposal #5-1 may be efficient when the number of candidate path loss offset values that can be indicated (e.g., configured) is large. In other words, Proposal #5-1 may be used when the number of candidate path loss offset values that can be indicated (e.g., configured) is large. A base station may transmit configuration information for all candidate path loss offset values to a terminal using RRC signaling. The terminal may receive the configuration information for all candidate path loss offset values through RRC signaling from the base station. The base station may generate MAC CE including codepoints mapped to N path loss offset values (e.g., candidate path loss offset values) among all candidate path loss offset values and may transmit the MAC CE to the terminal. N may be a natural number. The codepoint included in the MAC CE may indicate activation of N path loss offset values mapped to the codepoint. The terminal may receive the MAC CE from the base station and may identify the N path loss offset values activated by the codepoint included in the MAC CE. In other words, the terminal may identify the N path loss offset values mapped to the codepoint included in the MAC CE.

The base station may generate DCI including information indicating one path loss offset value among the N path loss offset values activated by the MAC CE and may transmit the DCI to the terminal. The terminal may receive the DCI from the base station and may identify one path loss offset value based on the information included in the DCI. The terminal may determine transmit power in consideration of the path loss offset value and may perform UL communication using the transmit power. Candidate path loss offset values indicated by RRC signaling may be configured independently of TCI states (e.g., TCI state configuration). Proposal #5-1 may be an extended method of Proposal #4-3.

### • Proposal #5-2

A base station may configure a list for UL power control (e.g., another UL transmission parameter list). A plurality of alpha set groups may be associated with one UL power control ID (e.g., one power parameter list ID). The base station may transmit, to a terminal, MAC CE or DCI including information for indicating a single alpha set among the plurality of alpha set groups associated with the one UL power control ID. The terminal may receive the MAC CE or the DCI from the base station and may identify the single alpha set indicated by the information included in the MAC CE or the DCI. In the exemplary embodiment of FIG. 10, a single alpha set may exist in an alpha set group. Based on the above-described scheme, a plurality of alpha sets may exist in an alpha set group. The number of alpha sets belonging to the alpha set group may be equal to the maximum number of mTRPs.

One alpha set among the plurality of alpha sets may be indicated by MAC CE or DCI. A single TCI state ID configured by RRC signaling may be associated with the plurality of alpha sets. The base station may transmit, to the terminal, MAC CE or DCI including information indicating a single alpha set among the plurality of alpha sets. The terminal may receive the MAC CE or the DCI from the base station and may identify the single alpha set indicated by the information included in the MAC CE or the DCI. The terminal may apply the single alpha set to determine transmit power for UL communication (e.g., PUSCH transmission, SRS transmission, or PUCCH transmission). The alpha set may refer to an alpha set for each of PUSCH (e.g., PUSCH transmission), SRS (e.g., SRS transmission), and PUCCH (e.g., PUCCH transmission). The alpha set may include *α*, p0, and/or a CL index. In addition, the alpha set may further include a path loss offset.

A plurality of UL power parameters (e.g., transmit power parameters) as well as a plurality of path loss offset values may be configured for the terminal by RRC signaling in consideration of a plurality of UL TRPs. The base station may indicate, to the terminal, one or more values among the plurality of path loss offset values and/or one or more parameters among the plurality of UL power parameters using dynamic signaling (e.g., MAC CE and/or DCI). The terminal may identify the one or more path loss offset values and/or the one or more UL power parameters indicated by RRC signaling and dynamic signaling from the base station. A single TCI state ID may be associated with at least a plurality of path loss offset values. The base station may transmit, to the terminal, MAC CE or DCI including information indicating one path loss offset value among the plurality of path loss offset values. The terminal may receive the MAC CE or the DCI from the base station and may identify the one path loss offset value indicated by the information included in the MAC CE or the DCI.

### • Proposal #5-3

Information indicating whether to use a path loss offset value configured according to the above-described proposal(s) may be included in MAC CE or DCI. A base station may transmit, to a terminal, MAC CE or DCI including the information indicating whether to use the path loss offset value. In other words, application or non-application of the path loss offset value may be dynamically signaled to the terminal. The terminal may receive the MAC CE or the DCI from the base station and may identify whether to use the path loss offset value based on the information included in the MAC CE or the DCI.

A dedicated path loss offset value for each TCI state and/or a common path loss offset value may be configured for the terminal by RRC signaling from the base station. Application or non-application of a path loss offset value (e.g., the dedicated path loss offset value or the common path loss offset value) may be indicated to the terminal by dynamic signaling (e.g., MAC CE or DCI) from the base station. One bit in the DCI may be used to indicate application or non-application of the path loss offset value.

### • Proposal #5-4

A base station may transmit a path loss offset value associated with a TCI state to a terminal through RRC signaling. Alternatively, the base station may transmit a path loss offset value not associated with a TCI state (e.g., a path loss offset value not associated with a TCI state) to the terminal through RRC signaling. The terminal may identify the path loss offset value configured by RRC signaling from the base station. The base station may update the path loss offset value configured by RRC signaling using MAC CE or DCI. An absolute value or a relative value of the path loss offset value may be delivered to the terminal. The path loss offset value configured by RRC signaling may be additionally corrected by MAC CE or DCI. A correction value by MAC CE or DCI may be an absolute value or a relative value (e.g., a relative value with respect to the path loss offset value configured by RRC signaling).

Information for updating (e.g., correcting) the path loss offset value may be included in a message other than an RRC message (e.g., MAC CE or DCI). The other message may be a signaling message. The terminal may update (e.g., correct) the path loss offset value based on information indicated by RRC signaling and dynamic signaling (e.g., MAC CE or DCI). In other words, the terminal may update (e.g., correct) the path loss offset value indicated by RRC signaling using information (e.g., a value for correction of the path loss offset value) indicated by dynamic signaling (e.g., MAC CE or DCI). The terminal may determine transmit power based on the updated path loss offset value and may perform UL communication (e.g., UL transmission) using the transmit power.

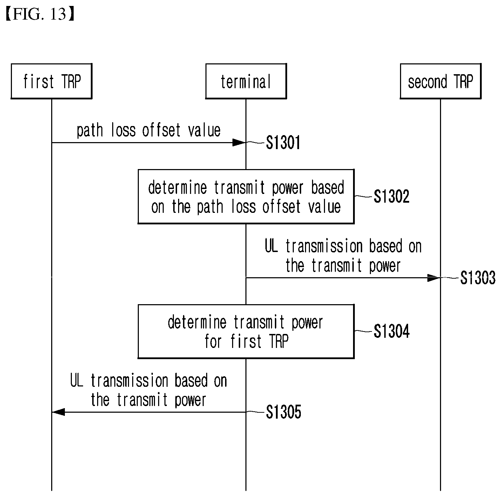

FIG. 13 is a sequence chart illustrating exemplary embodiments of a UL communication method in an asymmetric TRP system.

As shown in FIG. 13, the asymmetric TRP system may include a first TRP, a second TRP, and a terminal. The first TRP may correspond to the first TRP forming the macro cell illustrated in FIG. 9. The first TRP may refer to a serving cell, a serving base station, and the like. The second TRP may correspond to the second TRP forming the micro cell illustrated in FIG. 9. Communication coverage (e.g., service coverage) of the first TRP may be wider than communication coverage (e.g., service coverage) of the second TRP. The terminal may correspond to a terminal located in an overlapping region between the macro cell and the micro cell illustrated in FIG. 9. The terminal may perform DL communication with the first TRP. The terminal may perform UL communication with both the first TRP and the second TRP. Alternatively, the terminal may perform UL communication with the second TRP. The first TRP may transmit a path loss offset value to the terminal through signaling (S1301). The path loss offset value may be determined by the first TRP or a base station associated with the first TRP. The path loss offset value may be configured based on the above-described proposal(s) (e.g., Proposal #1, Proposal #2, Proposal #2-1, Proposal #2-2, Proposal #3, Proposal #4, Proposal #4-1, Proposal #4-2, Proposal #4-3, Proposal #5, Proposal #5-1, Proposal #5-2, Proposal #5-3, or Proposal #5-4). The first TRP may indicate the path loss offset value to the terminal through signaling based on the above-described proposal(s).

The terminal may receive the path loss offset value through signaling from the base station (S1301). The terminal may determine transmit power for UL communication with the second TRP based on the path loss offset value (S1302). The terminal may determine the transmit power based on Equation 1 below or Equation 2 below. In Equation 1 below or Equation 2 below, *PL_{offset}* may be a path loss offset (e.g., a path loss offset value). In Equations 1 and 2 below, *PL_{b,f,c}*(*q_{d}*) may denote a path loss value determined based on a measurement result of a reference signal (or a synchronization signal) received from the first TRP. [Equation 1] $\begin{matrix}{P}_{PUSCH , b , f , c} \left(i, j, {q}_{d}, l\right) = \\ min \left\{\begin{matrix}{P}_{CMAX , f , c} \left(i\right) \\ {P}_{O_PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ \left({PL}_{b , f , c}\left({q}_{d}\right)+{PL}_{offset}\right) + {Δ}_{TF , b , f , c} \left(i\right) + {f}_{b , f , c} \left(i, l\right)\end{matrix}\right\} \\ \left[dBm\right]\end{matrix}$ [Equation 2] $\begin{matrix}{P}_{PUSCH , b , f , c} \left(i, j, {q}_{d}, l\right) = \\ min \left\{\begin{matrix}{P}_{CMAX , f , c} \left(i\right) \\ {P}_{O_PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) + {PL}_{offset} + {Δ}_{TF , b , f , c} \left(i\right) + {f}_{b , f , c} \left(i, l\right)\end{matrix}\right\} \\ \left[dBm\right]\end{matrix}$

PUSCH occasion i may be defined by ${n}_{s , f}^{μ}$, which is a slot index in a system frame number (SFN). *µ* may indicate a subcarrier spacing (SCS) for PUSCH. s may indicate a starting symbol of PUSCH. f may indicate a carrier of a serving cell c. PUSCH may be configured over a duration of length of L from the starting symbol s. *j* may be used as a factor for distinguishing a parameter set (e.g., a parameter group). *l* may be used as a factor for distinguishing a power control adjustment state. b may be used to indicate an active BWP in which PUSCH is transmitted. *q_{d}* may indicate a resource index of an RS for measurement of path loss.

When a common path loss offset value is configured for the terminal, the terminal may determine transmit power for UL communication with the second TRP by applying the common path loss offset value regardless of a TCI state for the second TRP. When dedicated path loss offset value(s) are configured for the terminal, the terminal may determine transmit power for UL communication with the second TRP by applying a dedicated path loss offset value associated with (e.g., mapped to) the TCI state for the second TRP among the dedicated path loss offset value(s).

The terminal may perform UL communication with the second TRP using the transmit power determined in S1302 (S1303). In other words, the terminal may transmit PUSCH, SRS, and/or PUCCH to the second TRP. Transmit power for each of SRS transmission and PUCCH transmission may be determined using Equation 1, an equation having a form similar to Equation 1, Equation 2, or an equation having a form similar to Equation 2. The second TRP may receive PUSCH, SRS, and/or PUCCH from the terminal (S1303). The second TRP may expect that the transmit power of UL transmission received from the terminal is determined based on Equation 1, an equation having a form similar to Equation 1, Equation 2, or an equation having a form similar to Equation 2.

The terminal may determine transmit power for UL communication with the first TRP (S1304). The transmit power for UL communication with the first TRP may be determined based on Equation 3 below. The transmit power for UL communication with the first TRP may be determined without consideration of the path loss offset value. [Equation 3] $\begin{matrix}{P}_{PUSCH , b , f , c} \left(i, j, {q}_{d}, l\right) = \\ min \left\{\begin{matrix}{P}_{CMAX , f , c} \left(i\right) \\ {P}_{O_PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) + {Δ}_{TF , b , f , c} \left(i\right) + {f}_{b , f , c} \left(i, l\right)\end{matrix}\right\} \left[dBm\right]\end{matrix}$

The terminal may perform UL communication with the first TRP using the transmit power determined in step S1304 (S1305). In other words, the terminal may transmit PUSCH, SRS, and/or PUCCH to the first TRP. Transmit power for each of SRS transmission and PUCCH transmission may be determined using Equation 3 or an equation having a form similar to Equation 3. The first TRP may receive PUSCH, SRS, and/or PUCCH from the terminal (S1305). The first TRP may expect that the transmit power of UL transmission received from the terminal is determined based on Equation 3 or an equation having a form similar to Equation 3. The transmit power determined in step S1304 may be different from the transmit power determined in step S1302. For example, the transmit power determined in step S1304 may be greater than or equal to the transmit power determined in step S1302.

In the present disclosure, path loss offset values may be classified into a common path loss offset value and a dedicated path loss offset value. The common path loss offset value may be a path loss offset value commonly applicable regardless of a TCI state. In other words, the path loss offset value may be applied to all TCI states. The dedicated path loss offset value may be associated with one or more TCI states. The terminal may expect that the common path loss offset value is configured for (e.g., indicated to) the terminal. When the common path loss offset value is not configured for the terminal, the terminal may expect that the dedicated path loss offset value is configured for the terminal.

The base station may basically configure the common path loss offset value for the terminal. When the base station determines that configuration of the dedicated path loss offset value is required, the base station may configure the dedicated path loss offset value for the terminal without configuring the common path loss offset value. Alternatively, the base station may basically configure the common path loss offset value for the terminal, and when the base station determines that configuration of the dedicated path loss offset value is required, the base station may additionally configure the dedicated path loss offset value for the terminal. In other words, both the common path loss offset value and the dedicated path loss offset value may be configured for the terminal. The common path loss offset value may refer to a default path loss offset value, and the dedicated path loss offset value may refer to an additional path loss offset value.

When both the common path loss offset value and the dedicated path loss offset value are configured for the terminal, the terminal may select one path loss offset value among the common path loss offset value and the dedicated path loss offset value and may determine transmit power using the selected one path loss offset value. The terminal may select one path loss offset value having a high priority among the common path loss offset value and the dedicated path loss offset value. The common path loss offset value may have a higher priority than the dedicated path loss offset value. Alternatively, the dedicated path loss offset value may have a higher priority than the common path loss offset value. Priorities for path loss offset values may be predefined in technical specifications. A change of a TCI state may be indicated before UL transmission (e.g., UL communication) for a UL TRP is indicated (e.g., required). Accordingly, the dedicated path loss offset value may have a higher priority than the common path loss offset value.

A path loss offset value may be configured for the terminal based on at least one of system information, RRC signaling, MAC CE, or DCI. The terminal may expect to determine transmit power for UL transmission using a path loss offset value indicated by a message (e.g., a signaling message or signal) received at a time closest to the UL transmission. In other words, the terminal may receive path loss offset values from the base station at various times before the time at which the UL transmission is performed, and may determine transmit power for the UL transmission using a path loss offset value indicated by signaling received at the time closest to the UL transmission among the path loss offset values.

For example, the terminal may receive a common path loss offset value from the base station at a first time, may receive a dedicated path loss offset value from the base station at a second time after the first time in the time domain, and may determine transmit power for UL transmission at a third time after the second time in the time domain using the dedicated path loss offset value indicated at the second time, which is closest to the third time at which the UL transmission is performed. As another example, the terminal may receive a dedicated path loss offset value from the base station at a first time, may receive a common path loss offset value from the base station at a second time after the first time in the time domain, and may determine transmit power for UL transmission at a third time after the second time in the time domain using the common path loss offset value indicated at the second time, which is closest to the third time at which the UL transmission is performed.

In consideration of latency in the network, priorities of signaling schemes indicating a path loss offset value may be configured. DCI may have the highest priority, MAC CE may have a priority lower than the DCI, and RRC signaling may have a priority lower than the MAC CE. When a plurality of path loss offset values are configured for the terminal by a plurality of signaling schemes, the terminal may select one path loss offset value among the plurality of path loss offset values in consideration of the signaling priority and may determine transmit power for UL transmission using the selected one path loss offset value. For example, when DCI indicating a first path loss offset value and MAC CE indicating a second path loss offset value are received, since the DCI has a higher priority than the MAC CE, the terminal may determine transmit power for UL transmission using the first path loss offset value indicated by the DCI.

The terminal may update a path loss offset value in consideration of signaling priority. For example, when MAC CE indicating a second path loss offset value is received after reception of DCI indicating a first path loss offset value, since the DCI has a higher priority than the MAC CE, the terminal may not update the first path loss offset value to the second path loss offset value. As another example, when DCI indicating a second path loss offset value is received after reception of MAC CE indicating a first path loss offset value, since the DCI has a higher priority than the MAC CE, the terminal may update the first path loss offset value to the second path loss offset value.

To configure appropriate transmit power in an asymmetric TRP system, methods for improving power parameter(s) may be proposed in the present disclosure. A base station, TRP, and/or terminal may perform an operation for configuration of power parameter(s) (e.g., a path loss offset value) and/or determination of transmit power based on one proposal or a combination of a plurality of proposals.

The methods proposed in the present disclosure may be applied to UL grant-based PUSCH transmission, grant-free PUSCH transmission, configured grant (CG) PUSCH transmission, and/or semi-persistent (SP) PUSCH transmission. The methods proposed in the present disclosure may be applied not only to PUSCH transmission (e.g., UL-SCH (shared channel) transmission for an activated serving cell) but also to other UL transmissions (e.g., SRS transmission, PUCCH transmission, and the like). The methods proposed in the present disclosure may be applied to sidelink communication, supplementary uplink (SUL) communication, and the like. The methods proposed in the present disclosure may be applied not only in licensed-band communication but also in unlicensed-band communication.

In the present disclosure, a base station may be interpreted as a cell (e.g., a serving cell) or a TRP (e.g., a serving TRP) depending on context. In other words, an operation of the base station may be interpreted as an operation of the cell or an operation of the TRP depending on context. A terminal may report, to the base station, information indicating whether the function(s) proposed in the present disclosure are supported. The information indicating whether the function(s) are supported may be included in a UE capability report (e.g., UE capability information) transmitted by the terminal. The base station may receive the UE capability report from the terminal, may identify the function(s) supported by the terminal based on information included in the UE capability report, and may perform signaling and/or an operation for the identified function(s). The method proposed in the present disclosure may be used alone. A combination of the methods proposed in the present disclosure may be used. The methods proposed in the present disclosure may be performed independently of or depending on a type of a TCI state.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE), the method comprising:
receiving, from a first transmission and reception point (TRP), information on a path loss offset value;
determining, based on the path loss offset value, a second transmit power for second uplink (UL) communication with a second TRP; and
performing the second UL communication with the second TRP using the second transmit power.

2. The method of claim 1, further comprising:
determining, without consideration of the path loss offset value, a first transmit power for first UL communication with the first TRP; and
performing the first UL communication with the first TRP using the first transmit power.

3. The method of claim 1, wherein the path loss offset value is a common path loss offset value that is not associated with a transmission configuration indicator (TCI) state, and the common path loss offset value is applied to determine the second transmit power regardless of a TCI state of the second TRP.

4. The method of claim 1, wherein the path loss offset value is a dedicated path loss offset value configured to be associated with a TCI state, and one dedicated path loss offset value associated with the TCI state of the second TRP among one or more dedicated path loss offset values indicated by the first TRP is applied to determine the second transmit power.

5. The method of claim 1, wherein the information on the path loss offset value includes a common path loss offset value and a dedicated path loss offset value, and one path loss offset value selected based on priority between the common path loss offset value and the dedicated path loss offset value is used to determine the second transmit power.

6. The method of claim 1, wherein the information on the path loss offset value is received through at least one of a radio resource control (RRC) message, a medium access control (MAC) control element (CE), or downlink control information (DCI).

7. The method of claim 6, wherein the information on the path loss offset value is included in TCI state information or UL bandwidth part (BWP)-dedicated information, the TCI state information or the UL BWP-dedicated information being an RRC configuration indicated by the RRC message.

8. The method of claim 6, wherein the information on the path loss offset value is included in the MAC CE, and the MAC CE includes at least one of a first field indicating the path loss offset value, a second field indicating whether the path loss offset value exists in the MAC CE, or a third field indicating a sign of the path loss offset value.

9. The method of claim 6, wherein a plurality of path loss offset values associated with a plurality of TCI states are configured for the UE by the RRC message, two or more path loss offset values among the plurality of path loss offset values are activated by the MAC CE, one path loss offset value among the two or more path loss offset values is indicated to the UE by the DCI, and the one path loss offset value is used to determine the second transmit power.

10. The method of claim 1, further comprising: receiving, from the first TRP, information indicating whether to use the path loss offset value,
wherein, based on use of the path loss offset value being indicated, the path loss offset value is used to determine the second transmit power.

11. The method of claim 1, wherein the receiving of the information on the path loss offset value comprises:
receiving, from the first TRP, an RRC message including the path loss offset value; and
receiving, from the second TRP, a message including update information on the path loss offset value,
wherein the path loss offset value used to determine the second transmit power is a path loss offset value updated based on the update information.

12. A user equipment (UE) comprising at least one processor, wherein the at least one processor causes the UE to perform:
receiving, from a first transmission and reception point (TRP), information on a path loss offset value;
determining, based on the path loss offset value, a second transmit power for second uplink (UL) communication with a second TRP; and
performing the second UL communication with the second TRP using the second transmit power.

13. The UE of claim 12, wherein the at least one processor further causes the UE to perform:
determining, without consideration of the path loss offset value, a first transmit power for first UL communication with the first TRP; and
performing the first UL communication with the first TRP using the first transmit power.

14. The UE of claim 12, wherein the path loss offset value is a common path loss offset value that is not associated with a transmission configuration indicator (TCI) state, and the common path loss offset value is applied to determine the second transmit power regardless of a TCI state of the second TRP.

15. The UE of claim 12, wherein the path loss offset value is a dedicated path loss offset value configured to be associated with a TCI state, and one dedicated path loss offset value associated with the TCI state of the second TRP among one or more dedicated path loss offset values indicated by the first TRP is applied to determine the second transmit power.

16. The UE of claim 12, wherein in the receiving of the information on the path loss offset value, the at least one processor causes the UE to perform:
receiving, from the first TRP, a radio resource control (RRC) message including the path loss offset value; and
receiving, from the second TRP, a message including update information on the path loss offset value,
wherein the path loss offset value used to determine the second transmit power is a path loss offset value updated based on the update information.

17. The UE of claim 12, wherein the information on the path loss offset value is received through at least one of a radio resource control (RRC) message, a medium access control (MAC) control element (CE), or downlink control information (DCI).

18. The UE of claim 17, wherein the information on the path loss offset value is included in the MAC CE, and the MAC CE includes at least one of a first field indicating the path loss offset value, a second field indicating whether the path loss offset value exists in the MAC CE, or a third field indicating a sign of the path loss offset value.

19. The UE of claim 17, wherein a plurality of path loss offset values associated with a plurality of TCI states are configured for the UE by the RRC message, two or more path loss offset values among the plurality of path loss offset values are activated by the MAC CE, one path loss offset value among the two or more path loss offset values is indicated to the UE by the DCI, and the one path loss offset value is used to determine the second transmit power.

20. The UE of claim 12, wherein the at least one processor further causes the UE to perform: receiving, from the first TRP, information indicating whether to use the path loss offset value,
wherein, based on use of the path loss offset value being indicated, the path loss offset value is used to determine the second transmit power.
